# EUROPÄISCHE PATENTSCHRIFT

(11) **EP 1 362 220 B1**
(45) Veröffentlichungstag und Bekanntmachung des Hinweises auf die Patenterteilung: **10.11.2010**
(21) Anmeldenummer: 02712742.2
(22) Anmeldetag: 05.02.2002
(51) Int. Cl.: G01C 21/34

(54) **VERFAHREN ZUM ÜBERTRAGEN VON ROUTENDATEN**
METHOD FOR TRANSMITTING ROUTE DATA
PROCEDE POUR TRANSFERER DES DONNEES D'ITINERAIRE

(30) Priorität: 13.02.2001 DE 10106502
(43) Veröffentlichungstag der Anmeldung: 19.11.2003
(73) Patentinhaber: ROBERT BOSCH GMBH, 70442 Stuttgart (DE)
(72) Erfinder: BUECHER, Andreas, 37520 Osterode (DE); FRIEDRICHS, Arne, 38114 Braunschweig (DE); DRAEGER, Gerd, 38102 Braunschweig (DE); SKWAREK, Volker, 31162 Bad Salzdetfurth (DE)
(86) Internationale Anmeldenummer: PCT/DE2002/000401
(87) Internationale Veröffentlichungsnummer: WO 2002/065057

(56) Entgegenhaltungen:
- EP-A- 0 943 896
- US-A- 5 919 245

## Beschreibung

Die vorliegende Erfindung betrifft ein Verfahren, um wenigstens Routendaten von einer Zentrale zu einem Endgerät, insbesondere zu einem Fahrzeugnavigationsgerät, zu übertragen, wobei die Routendaten zumindest einen Routenkorridor betreffen, der einen Routenkorridorstartpunkt und einen Routenkorridorzielpunkt aufweist.

### Stand der Technik

Es sind verschiedene Verfahren bekannt, um Routendaten von einer Zentrale zu einem Endgerät, insbesondere einem Fahrzeugnavigationsgerät, zu übertragen. Eine derartige Übertragung von Routendaten ist insbesondere im Zusammenhang mit sogenannten Offboard-Fahrzeugnavigationsgeräten erforderlich, bei denen das Fahrzeugnavigationsgerät selbst keine ausreichende Datenbasis mitführt, um Routen zu berechnen und/oder um Wegpunkte zu verifizieren. Insbesondere in diesem Zusammenhang ist es nachteilig, wenn die Routendaten nicht vollständig im Sinne einer Turn-By-Turn-Navigation sind. Weiterhin ist es häufig nicht möglich, zwischen Start und Ziel Routenalternativen innerhalb eines Datensatzes zu übertragen. Ein weiteres Problem besteht häufig darin, dass die Speicherung der Routendaten häufig verhältnismäßig viel Speicherplatz erfordert.

### Vorteile der Erfindung

Dadurch, dass bei dem erfindungsgemäßen Verfahren vorgesehen ist, dass die Routendaten Wegpunktdaten umfassen, die Wegpunkte betreffen, die zwischen dem Routenkorridorstartpunkt und dem Routenkorridorzielpunkt liegen, wobei zwei benachbarte Wegpunkte durch einen Weg verbunden sind und der Routenkorridorstartpunkt und der Routenkorridorzielpunkt ebenfalls einen jeweiligen Wegpunkt bilden, und dass die Wegpunktdaten zusätzlich zu den Attributen des entsprechenden Wegpunktes Attribute von Wegen umfassen, die von dem entsprechenden Wegpunkt abzweigen, wird ein Codierungsverfahren bereitgestellt, mit dem Routeninformationen beziehungsweise -daten effizient und flexibel optimierbar von' einer Zentrale beziehungsweise einem Server zu einem Endgerät übertragen werden können. Mit den durch das erfindungsgemäße Verfahren übertragenen Routendaten ist es beispielsweise möglich, eine Turn-By-Turn-Navigation durchzuführen. Darüber hinaus können die Routendaten speicheroptimiert übertragen und/oder im Endgerät abgelegt werden. Das erfindungsgemäße Verfahren ermöglicht es, zusätzlich zur Hauptroute auch einzelne Verzweigungen und/oder ganze Alternativrouten zu übertragen. Die einzelnen Wegpunkte eines Routenkorridors sind dabei so miteinander verknüpft, dass ein möglichst geringes Datenvolumen erzeugt wird und die Reihenfolge der Übertragung der Wegpunktdaten flexibel ist. Durch die optimierbare Reihenfolge der Übertragung der Wegpunktdaten ist eine Zielführung bereits nach Erhalt einer kleinen Teilmenge der Routendaten auf dem Endgerät möglich.

Bei dem erfindungsgemäßen Verfahren ist vorzugsweise weiterhin vorgesehen, dass vor der Übertragung der Routendaten Metadaten übertragen werden, die angeben, welches Datenformat die Wegpunktdaten aufweisen und welche Informationen sie enthalten. Im Anschluss an die Übertragung der Metadaten können dann die Routendaten beispielsweise in Form von sequentiellen Wegpunktdaten übertragen werden.

Die Metadaten können dabei eine oder mehrere der folgenden Metainformationen betreffen:
- Sprachkennung,
- Länderkennung,
- verwendeter Zeichensatz,
- Bezugssystem (Einheiten),
- Links- oder Rechtsverkehr,
- Fahrtzeit und/oder Straßenklasse für jedes Teilstück des Routenkorridors vorhanden?,
- Länge jedes Teilstücks des Routenkorridors vorhanden?,
- Verwendete Koordinatencodierung,
- Codierung der Wegpunktnummer,
- Codierung der Routing-ID,
- Restfahrtzeit und/oder Reststrecke zum Ziel vorhanden?

Wie erwähnt, ist bei dem erfindungsgemäßen Verfahren vorzugsweise vorgesehen, dass die Wegpunktdaten sequentiell übertragen werden.

In diesem Zusammenhang ist vorzugsweise weiterhin vorgesehen, dass die Wegpunktdaten für zu Beginn des Routenkorridors liegende Wegpunkte zuerst übertragen werden. Dadurch wird es ermöglicht, die Zielführung bereits nach Erhalt einer kleinen Teilmenge der Routendaten auf dem Endgerät zu ermöglichen.

Die Wegpunktdaten weisen vorzugsweise ein Wegpunktdatenfeld für die Koordinaten des Wegpunktes auf. Die Koordinaten der Wegpunkte zählen zu den Informationen, die für eine Zielführung in der Regel unverzichtbar sind.

Insbesondere dann, wenn die Routendaten beziehungsweise die Wegpunktdaten ein flexibles beziehungsweise dynamisches Datenformat aufweisen, ist bei dem erfindungsgemäßen Verfahren vorzugsweise vorgesehen, dass die Wegpunktdaten einen Wegpunktdatenkopf beziehungsweise -header aufweisen, der angibt, ob die jeweiligen Wegpunktdaten optionale Wegpunktdatenfelder aufweisen. Über einen derartigen Wegpunktdatenkopf kann beispielsweise festgestellt werden, ob es sich bei dem Wegpunkt um einen Randpunkt handelt, ob ein expliziter Nachfolger für den Wegpunkt angegeben ist, ob ein Straßenname vorhanden ist, ob ein graphischer Zielführungshinweis vorhanden ist, ob ein akustischer Zielführungshinweis vorhanden ist, ob ein erstes reserviertes Datenfeld vorhanden ist, ob ein zweites reserviertes Datenfeld vorhanden ist oder ob Abzweige vorhanden sind. Über den Wegpunktdatenkopf kann dabei vorzugsweise lediglich festgestellt werden, ob derartige Informationen für den aktuellen Wegpunkt überhaupt vorliegen oder nicht, während die eigentliche Information in speziell dafür vorgesehen Datenfeldern untergebracht wird.

Bei dem erfindungsgemäßen Verfahren ist vorzugsweise weiterhin vorgesehen, dass der Wegpunktdatenkopf die Form eines Bitfeldes aufweist. In diesem Fall kann durch das Setzen eines einzelnen Bits beziehungsweise Flags angegeben werden, ob die aktuellen Wegpunktdaten ein bestimmtes Datenfeld aufweisen oder nicht. Sofern die Wegpunktdaten ein festes Datenformat aufweisen, kann der Wegpunktdatenkopf in ähnlicher Weise angeben, ob in den entsprechenden Datenfeldern Daten enthalten sind. Allerdings kann im Fall von Wegpunktdaten mit festen Datenformat in vielen Fällen auf einen Wegpunktdatenkopf verzichtet werden, da die Datenfelder in diesem Fall auch direkt bezüglich ihrem Inhalt überprüft werden können.

Bei dem erfindungsgemäßen Verfahren ist vorzugsweise weiterhin vorgesehen, dass die optionalen Wegpunktdatenfelder eines oder mehrere der folgenden Datenfelder umfassen:
- Routing-ID,
- Nummer des nachfolgenden Wegpunktes,
- Straßenname,
- grafischer Zielführungshinweis,
- akustischer Zielführungshinweis,
- Straßenklasse, Zeit Länge,
- erstes reserviertes Datenfeld,
- zweites reserviertes Datenfeld,
- Liste der Falschabzweige,
- Anzahl von Wegpunkten.

Bei der Anzahl von Wegpunkten kann es sich beispielsweise um die Anzahl von Wegpunkten handeln, die aufeinander folgend ohne Angabe einer Wegpunktnummer übertragen wird. Ebenso ist es möglich, die Anzahl von Wegpunkten für eine Teilroute oder eine Gesamtroute zu übertragen.

Insbesondere, um den zur Speicherung der Route erforderliche Speicherplatz zu minimieren, aber auch um nicht überflüssige Daten zu übertragen, sieht das erfindungsgemäße Verfahren vorzugsweise weiterhin vor, dass für einen Wegpunkt nur die optionalen Wegpunktdatenfelder vorgesehen werden, deren Inhalt sich bezüglich dem vorhergehenden Wegpunkt ändert.

Wie erwähnt, sind die einzelnen Wegpunkte des zu übertragenen Routenkorridors bei dem erfindungsgemäßen Verfahren vorzugsweise derart miteinander verknüpft, dass ein möglichst geringes Datenvolumen erzeugt wird. Zu diesem Zweck kann vorgesehen sein, dass zumindest dann angenommen wird, dass der nächste Wegpunkt durch die nächsten übertragenen Wegpunktdaten definiert ist, wenn die Wegpunktdaten keine Angaben bezüglich dem'nächsten Wegpunkt beziehungsweise dem Folgewegpunkt enthalten.

Sofern eine Liste für Falschabzweige vorgesehen ist, weist diese Liste vorzugsweise ein Datenfeld für die Anzahl der in der Liste enthaltenen Abzweige auf.

In diesem Zusammenhang sieht das erfindungsgemäße Verfahren vorzugsweise weiterhin vor, dass die Liste der Falschabzweige für jeden Abzweig Abzweigdaten umfasst, die zumindest ein Abzweigdatenfeld für den Wegpunktdatenkopf und ein Abzweigdatenfeld für die Nachfolgernummer aufweist. Im Gegensatz zu den Wegpunkten der Hauptroute ist für die Abzweige die Kennung des Nachfolgerwegpunktes innerhalb der Alternativroute in der Regel erforderlich, da pro Wegpunkt mehr als ein Abzweig möglich ist und folglich die Wegpunktdaten nicht unmittelbar im Anschluss übertragen werden können.

Ähnlich wie bei den Wegpunktdaten der Hauptroute ist vorzugsweise auch im Zusammenhang mit den Abzweigen vorgesehen, dass ein Abzweigdatenfeld ein oder mehrere der folgenden Datenfelder umfasst:
- Straßenname,
- grafischer Zielführungshinweis,
- akustischer Zielführungshinweis,
- Straßenklasse, Zeit Länge,
- erstes reserviertes Datenfeld,
- zweites reserviertes Datenfeld,
- Liste der Falschabzweige.

Ähnlich wie bei den Wegpunkten der Hauptroute kann auch im Zusammenhang mit den Abzweigen vorgesehen sein, dass für einen Abzweig die optionalen Abzweigdatenfelder vorgesehen werden, deren Inhalt sich bezüglich dem vorhergehenden Abzweig ändert.

Wie erwähnt, können bestimmte Ausführungsformen des erfindungsgemäßen Verfahrens vorsehen, dass die Routendaten ein festes Datenformat aufweisen. Beispielsweise können immer alle der genannten optionalen Datenfelder vorgesehen sein. In diesem Fall kann gegebenenfalls auf einen Wegpunktdatenkopf verzichtet werden. In diesem Fall liegt ein starres Datenformat vor, bei dem die Informationen an zuvor festgelegten Positionen eingetragen werden. Wenn die entsprechenden Daten nicht verwendet werden, sind die entsprechenden Datenfelder unbelegt.

Andere Ausführungsformen des erfindungsgemäßen Verfahrens können vorsehen, dass die Routendaten ein flexibles Datenformat aufweisen. In diesem Fall' zeichnen sich die Informationen vorzugsweise dadurch aus, dass sie durch ein Voranstellen von Metainformationen kenntlich gemacht werden. Das Datenformat ist in diesem Fall flexibler und überträgt keine unnötigen Informationen und legt folglich auch keine unnötigen Informationen ab. Allerdings benötigt jede einzelne Information bei derartigen Ausführungsformen des erfindungsgemäßen Verfahrens mehr Speicher, da ihr jeweils eine Kennzeichnung vorangestellt werden muss, in Form von Metadaten und/oder Wegpunktdatenköpfen.

Jedes Endgerät, insbesondere jedes Fahrzeugnavigationsgerät, dass zur Teilnahme an dem Verfahren nach einem.der vorhergehenden Ansprüche ausgelegt ist, fällt in den Schutzbereich der zugehörigen Ansprüche.

Gleiches gilt für jede Zentrale, die zur Teilnahme an dem erfindungsgemäßen Verfahren ausgelegt ist.

### Zeichnungen

Die Erfindung wird nachfolgend anhand der zugehörigen Zeichnungen.noch näher erläutert.

Es zeigen:
- Figur 1: eine Darstellung, die die gegenseitige Lage von Wegpunkten von einer Hauptroute und von zwei Alternativrouten zeigt,
- Figur 2a: eine erste Möglichkeit zur optimierten Übertra- gung der Route gemäß Figur 1,
- Figur 2b: eine zweite Möglichkeit zur optimierten Über- tragung der Route gemäß Figur 1,
- Figur 3: eine Darstellung, die Beispiele für Metainfor- mationen veranschaulicht,
- Figur 4: eine Darstellung, die ein mögliches Datenformat für die Routendaten veranschaulicht, und
- Figur 5: eine Darstellung, die ein mögliches Datenformat für die Liste der Falschabzweige veranschau- licht.

### Beschreibung der Ausführungsbeispiele

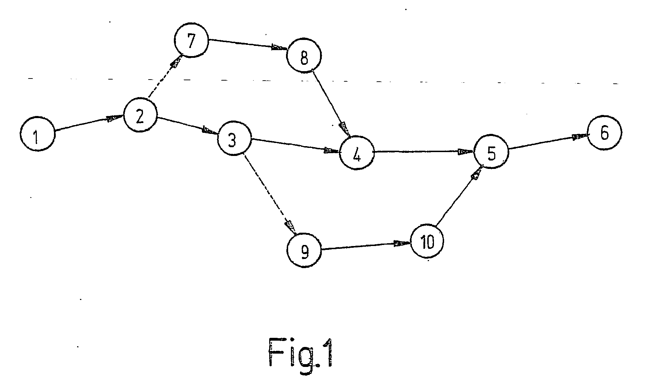

Figur 1 zeigt die gegenseitige Lage von Wegpunkten 1, 2, 3, 4, 5, 6 einer Hauptroute eines Routenkorridors, wobei der Routenkorridorstartpunkt der Wegpunkt 1 ist, während der Routenkorridorzielpunkt der Wegpunkt 6 ist. Eine erste Alternativroute verläuft über einen Abzweig vom Wegpunkt 2 über Wegpunkte 7, 8 zum Wegpunkt 4 der Hauptroute. Eine weitere Alternativroute' verläuft über einen Abzweig vom Wegpunkt 3 über die Wegpunkte 9, 10 zum Wegpunkt 5 der Hauptroute. Der Routenkorridor besteht im dargestellten Fall aus den Wegpunkten 1 - 10 sowie gerichteten Verbindungen zwischen den Wegpunkten 1 - 10, wie dies durch die durchgezogenen Pfeile in Figur 1 dargestellt ist. Die Falsch- beziehungsweise Alternativabzweige sind in Figur 1 durch gestrichelte Pfeile dargestellt. Die Abbiegehinweise ergeben sich dabei aus der Lage der Wegpunkte zueinander, sowie der Annahme, dass alle Punkte durch näherungsweise gerade Linien miteinander verbunden sind.

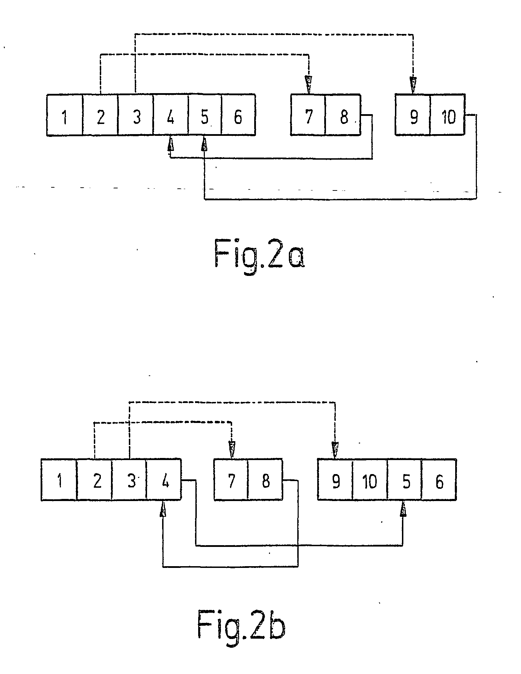

Figur 2a zeigt eine erste Möglichkeit zur optimierten Übertragung von Routendaten für die Route gemäß Figur 1. Dabei werden zuerst die Wegpunktdaten für die Wegpunkte 1 - 6 übertragen. Für die Wegpunkte 1 - 6 brauchen keine Nachfolgerinformationen übertragen zu werden, da beim Fehlen derartiger Informationen davon ausgegangen wird, dass der Folgewegpunkt durch die als nächstes übermittelten Wegpunktdaten definiert wird. Anschließend werden die Wegpunktdaten für die Wegpunkte 7, 8 der ersten Alternativroute übertragen. Die Wegpunktdaten für den Wegpunkt 8 enthalten dabei ein Wegpunktdatenfeld mit Informationen für den Folgewegpunkt, der in diesem Fall durch den Wegpunkt 4 gebildet ist, wie dies in Figur 2a durch einen durchgezogenen Pfeil angedeutet ist. Schließlich werden die Wegpunktdaten für die Wegpunkte 9, 10 übertragen, wobei die Wegpunktdaten für den Wegpunkt 10 wieder ein Wegpunktdatenfeld enthalten, das den Folgewegpunkt angibt, in diesem Fall den Wegpunkt 5. Figur 2a ist somit zu entnehmen, dass nur zwei explizite Verknüpfungen der Nachfolger erforderlich sind. Vorzugsweise enthalten die Wegpunktdaten optionale Wegpunktdatenfelder, mit denen weitere Informationen, wie zum Beispiel der Straßenname und so weiter, übertragen werden.
Figur 2b zeigt eine zweite Möglichkeit zur optimierten Übertragung von Routendaten für die Route gemäß Figur 1. Bei dieser zweiten Möglichkeit werden zunächst die Wegpunktdaten für die Wegpunkte 1 - 4 übertragen, wobei die Wegpunktdaten des Wegpunktes 4 ein Datenfeld enthalten, das als Nachfolger den Wegpunkt 5 festlegt. Anschließend erfolgt die Übertragung der Wegpunktdaten für die Wegpunkte 7, 8, wobei die Wegpunktdaten für den Wegpunkt 8 ein Datenfeld umfassen, das als Folgewegpunkt den Wegpunkt 4 festlegt, wie dies in Figur 2b durch den durchgezogenen Pfeil angedeutet ist. Anschließend erfolgt die Übertragung der Wegpunktdaten für die Wegpunkte 9, 10, 5 und 6, in dieser Reihenfolge. Auch bei der in Figur 2b dargestellten zweiten Möglichkeit zur optimierten Übertragung der Routendaten sind nur zwei explizite Verknüpfungen der Nachfolger erforderlich. Diese ist für die Wegpunktdaten der Wegpunkte 4 und 8 vorgesehen. Bezüglich der anderen Wegpunkte wird davon ausgegangen, dass die als nächstes übertragenen Wegpunktdaten den Folgewegpunkt festlegen.

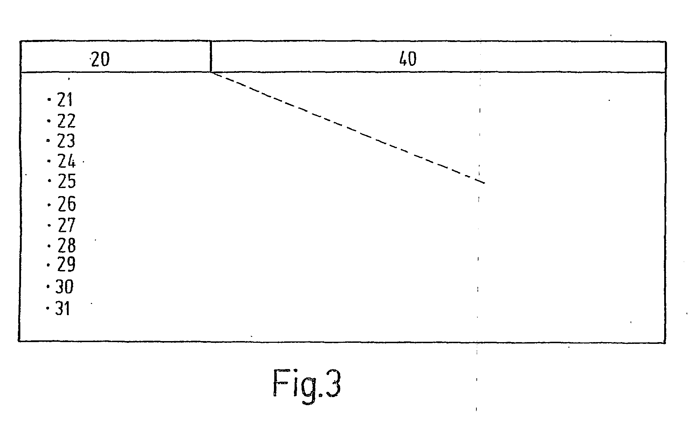

Figur 3 zeigt eine Darstellung, die Beispiele für Metainformationen veranschaulicht, wobei sich der Inhalt der entsprechenden Felder aus der folgenden Tabelle 1 ergibt.

**Tabelle 1**

| Feld | Inhalt |
|---|---|
| 20 | Metainformationen |
| 21 | Sprachkennung |
| 22 | Länderkennung |
| 23 | Verwendeter Zeichensatz |
| 24 | Bezugssystem (Einheiten) |
| 25 | Links-/Rechtsverkehr? |
| 26. | Fahrtzeit beziehungsweise Straßenklasse für jedes Routenteilstück vorhanden? |
| 27 | Länge jedes Routenstückes vorhanden? |
| 28 | Verwendete Koordinatencodierung |
| 29 | Codierung der Wegpunktnummer (z. B. 16 oder 32 Bit) |
| 30 | Codierung der Routing-ID (z. B. 16 oder 32 Bit) |
| 31 | ggf. Restzeit und Reststrecke zum Ziel |
| 40 | Routendaten |

Die zeitliche Datenübertragung erfolgt gemäß der Darstellung von Figur 3 von links nach rechts, das heißt, zuerst werden die Metadaten 20 und dann die Routendaten 40 übertragen.

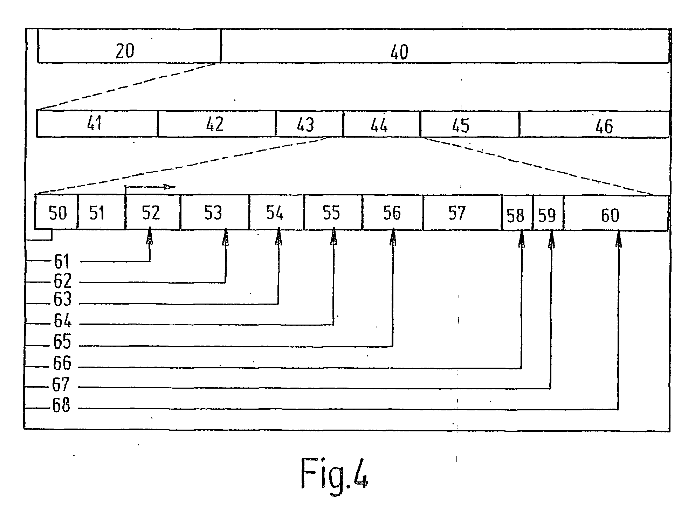

Figur 4 zeigt eine Darstellung, die eine mögliche Datenstruktur für die Routendaten veranschaulicht, wobei sich der Inhalt der entsprechenden Felder aus der folgenden Tabelle 2 ergibt.

**Tabelle 2**

| Feld | Inhalt |
|---|---|
| 20 | Metainformationen |
| 40 | Routendaten |
| 41 | Nummer des Zielwegpunktes |
| 42 | nₖ = Anzahl Wegpunkte |
| 43 | Wegpunkt 1 |
| 44 | Wegpunkt 2 |
| 45 | ... |
| 46 | Wegpunkt nₖ |
| 50 | Flags |
| 51 | Koordinaten |
| 52 | Routing-ID |
| 53 | Nachfolgernummer |
| 54 | Straßenname |
| 55 | Grafischer Zielführungshinweis |
| 56 | Akustischer Zielführungshinweis |
| 57 | Straßen-Klasse/Zeit, Länge |
| 58 | Reserviert 1 |
| 59 | Reserviert 2 |
| 60 | Liste der Falschabzweige |
| 61 | Randpunkt? |
| 62 | Expliziter Nachfolger angegeben? |
| 63 | Straßenname vorhanden? |
| 64 | Grafischer Zielführungshinweis vorhanden? |
| 65 | Akustischer Zielführungshinweis vorhanden? |
| 66 | Reserviert 1 vorhanden? |
| 67 | Reserviert 2 vorhanden? |
| 68 | Abzweige vorhanden? |

Wie dies Figur 4 zu entnehmen ist, sind die Routendaten derart strukturiert, dass in einem Datenfeld 41 zunächst die Nummer des Zielwegpunktes übertragen wird, gefolgt von der Anzahl der Knoten nₖ, die im Datenfeld 42 übertragen wird. An diese Informationen schließen sich die Wegpunktdaten für die Wegpunkte 1 bis nₖ sequentiell an. In diesem Zusammenhang wird darauf hingewiesen, dass der Begriff Datenfeld innerhalb dieser Anmeldung derart verwendet wird, dass ein Datenfeld durchaus weitere Datenfelder oder strukturierte Datenfelder umfassen kann. In Figur 4 ist der Inhalt des Datenfeldes 44 näher dargestellt. Die dargestellten Wegpunktdaten für den Wegpunkt 2 umfassen dabei Datenfelder 50 - 60. Bei der dargestellten.Ausführungsform sind die Datenfelder 50 und 51 für jeden Wegpunkt vorhanden, während die Datenfelder 52 - 60 optionale Wegpunktdatenfelder sind. Bei dem Datenfeld 50 handelt es sich um einen Wegpunktdatenkopf 50, der angibt, ob die jeweiligen Wegpunktdaten optionale Wegpunktdatenfelder 52 - 60 aufweisen. Der Wegpunktdatenkopf 50 ist in Form eines Bitfeldes vorgesehen, in dem entsprechende Flags gesetzt werden können, die beispielsweise Informationen darüber enthalten können, ob es sich bei dem aktuellen Wegpunkt um einen Randpunkt handelt (61), ob ein expliziter Nachfolger angegeben ist (62), ob der Straßenname vorhanden ist (63), ob ein graphischer Zielführungshinweis vorhanden ist (64), ob ein akustischer Zielführungshinweis vorhanden ist (65), ob ein erstes reserviertes Datenfeld vorhanden ist (66), ob ein zweites reserviertes Datenfeld vorhanden ist (67) oder ob Abzweige vorhanden sind (68). Der Wegpunktdatenkopf 50 kann dabei beispielsweise derart vorgesehen werden, dass eine jeweilige "1" angibt, dass die entsprechenden Informationen in den Wegpunktdaten vorhanden sind, während eine "0" angibt, dass die entsprechenden Informationen bei den aktuellen Wegpunktdaten nicht enthalten sind. Bezüglich des jeweiligen Inhalts der optionalen Wegdatenfelder 52 - 60 wird auf die obige Tabelle 2 verwiesen. Um das Datenvolumen so gering wie möglich zu halten, sieht das erfindungsgemäße Verfahren vorzugsweise vor, dass die optionalen Wegdatenfelder nur dann vorgesehen beziehungsweise mit Daten gefüllt sind, wenn sich die entsprechenden Daten im Vergleich zum vorhergehenden Wegpunkt geändert haben.

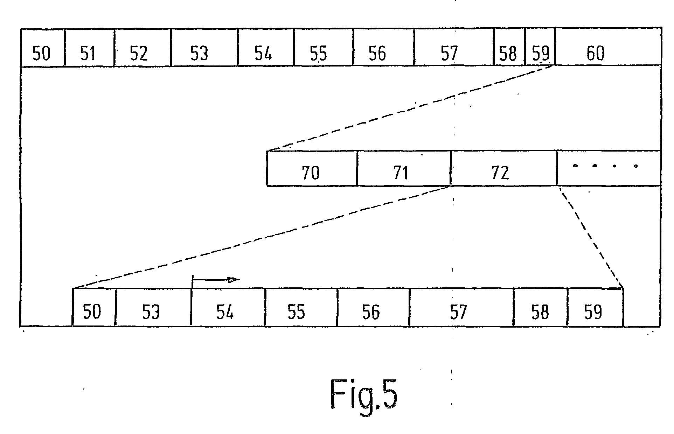

Figur 5 zeigt eine Darstellung, die ein mögliches Datenformat für die Liste der Falschabzweige veranschaulicht, wobei sich der jeweilige Inhalt der entsprechenden.Felder aus der folgenden Tabelle 3 ergibt.

**Tabelle 3**

| Feld | Inhalt |
|---|---|
| 50 | Typ/Flags |
| 51 | Koordinaten |
| 52 | Routing-ID |
| 53 | Nachfolgernummer |
| 54 | Straßenname |
| 55 | Grafischer Zielführungshinweis |
| 56 | Akustischer Zielführungshinweis |
| 57 | Straßen-Klasse/Zeit, Länge |
| 58 | Reserviert 1 |
| 59 | Reserviert 2 |
| 60 | Liste der Falschabzweige |
| 70 | nₐ = Anzahl der Abzweige |
| 71 | Abzweig 1 |
| 72 | Abzweig nₐ |

Figur 5 ist eine mögliche Struktur für die Liste der Falschabzweige zu entnehmen. Dabei enthält ein Datenfeld 70 die Anzahl der Abzweige nₐ, wobei die Abzweigdaten für einen entsprechenden Abzweig in den Abzweigdatenfeldern 71, 72, ... enthalten sind. Ein Abzweigdatenfeld 71, 72 enthält bei der dargestellten Ausführungsform in jedem Fall einen Wegpunktdatenkopf 50 und Angaben, die den Folgewegpunkt identifizieren, beispielsweise die Nachfolgernummer. Die Datenfelder 54 - 59 sind wieder optional vorgesehen.

Der Grundgedanke der vorliegenden Erfindung lässt sich auch wie folgt beschreiben: Für eine navigierbare Route sind minimal die folgenden Informationen notwendig: geographische Position des aktuellen Wegpunktes und die Kennung des nächsten anzusteuernden Wegpunktes. Daraus lassen sich für eine ideale Anordnung der Wegpunkte weitere notwendige Informationen bestimmen:
- Abbiegehinweise ergeben sich aus der Lage von Wegpunkten zueinander sowie der Annahme, dass alle Wegpunkte durch näherungsweise gerade Linien miteinander verbunden sind.
- Ist für einen Wegpunkt kein Folgewegpunkt angegeben, so ist der nächste Wegpunkt in der Liste der Folgewegpunkt.

Über diese Minimalinformationen hinaus sind weitere Informationen möglich, die zu einer genaueren Spezifikation den Wegpunktdaten zugeführt werden können. Dazu gehören beispielsweise solche Informationen, wie sie in Figur 3 dargestellt sind. Zur Übertragung gibt es zumindest zwei Alternativen: Entweder liegt ein starres Datenformat vor, bei dem die Informationen an zuvor festgelegten Positionen eingetragen werden. In dem Fall, in dem die Daten nicht verwendet werden, sind diese Felder unbelegt, benötigen jedoch weiterhin Speicher. Oder das Datenformat ist flexibel. Dann zeichnen sich die Informationen dadurch aus, dass sie durch ein Voranstellen von Metainformationen kenntlich gemacht werden. Ein Beispiel dafür ist in Figur 3 gezeigt. Das Datenformat ist dann flexibler und überträgt beziehungsweise legt keine unbenötigten Informationen ab. Allerdings benötigt jede einzelne Information dann mehr Speicher, da ihr jeweils eine Kennzeichnung vorangestellt werden muss.

Die Route besteht mindestens aus einer Folge von Koordinaten, bei denen der Routenkorridorzielpunkt sowie mögliche Routenalternativen kenntlichen gemacht werden (Figur 4). Als Kennzeichen können beispielsweise die Nummer des Routenkorridorzielpunktes und/oder Nummern von Routenalternativen gekennzeichnet werden. Denkbar sind weitere, optionale Zusatzinformationen wie Straßennamen, akustischen und/oder optische Zielführungshinweise oder ähnliches:

Abzweige lassen sich nach demselben Prinzip in die Liste einfügen. Allerdings benötigen diese im Gegensatz zur Hauptroute in der Regel explizit die Kennung der Nachfolgewegpunkte innerhalb der Alternativrouten, da mehr als ein Abzweig pro Wegpunkt möglich ist und diese daher nicht direkt im Anschluss übertragen werden können (Figur 5).

Die vorhergehende Beschreibung der Ausführungsbeispiele gemäß der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihre Äquivalente zu verlassen.

## Patentansprüche

1. Verfahren, um wenigstens Routendaten (40) von einer Zentrale zu einem Endgerät, insbesondere einem Fahrzeugnavigationsgerät, zu übertragen, wobei die Routendaten (40) zumindest einen Routenkorridor betreffen, der einen Routenkorridorstartpunkt (1) und einen Routenkorridorzielpunkt (6) aufweist, wobei die Routendaten (40) Wegpunktdaten (44-46) umfassen, die Wegpunkte (1-10) betreffen, die zwischen dem Routenkorridorstartpunkt (1) und dem Routenkorridorzielpunkt (6) liegen, wobei zwei benachbarte Wegpunkte durch einen Weg verbunden sind und der Routenkorridorstartpunkt (1) und der Routenkorridorzielpunkt (6) ebenfalls einen jeweiligen Wegpunkt (1,6) bilden, und wobei die Wegpunktdaten (44-46) zusätzlich zu den Attributen des entsprechenden Wegpunktes (1-10) Attribute von Wegen umfassen, die von dem entsprechenden Wegpunkt (1-10) abzweigen, **dadurch gekennzeichnet, dass** die Wegpunktdaten (44-46) für zu Beginn des Routenkorridors liegende Wegpunkte zuerst übertragen werden und dass zumindest dann angenommen wird, dass der nächste Wegpunkt durch die nächsten übertragenen Wegpunktdaten (44-46) definiert wird, wenn die Wegpunktdaten (44-46) keine Angabe bezüglich dem nächsten Wegpunkt (1-10) enthalten.

2. Verfahren nach Anspruch 1, **dadurch gekennzeichnet, dass** vor der Übertragung der Routendaten (40) Metadaten (20) übertragen werden, die angeben, welches Datenformat die Wegpunktdaten (44 - 46) aufweisen und welche Informationen sie enthalten.

3. Verfahren nach Anspruch 2, **dadurch gekennzeichnet, dass** die Metadaten (20) eine oder mehrere der folgenden Metainformationen betreffen:
- Sprachkennung (21),
- Länderkennung (22),
- verwendeter Zeichensatz (23),
- Bezugssystem (Einheiten) (23),
- Links- oder Rechtsverkehr (24),
- Fahrtzeit und/oder Straßenklasse für jedes Teilstück des Routenkorridors vorhanden? (25),
- Länge jedes Teilstücks des Routenkorridors vorhanden? (26),
- Verwendete Koordinatenoodierung (27),
- Codierung der Wegpunktnummer (28),
- Codierung der Routing-ID (29),
- Restfahrtzeit und/oder Reststrecke zum Ziel (30) vorhanden?

4. Verfahren nach einem der vorhergehenden Anspruche, **dadurch gekennzeichnet, dass** die Wegpunktdaten (44-46) sequentiell übertragen werden.

5. Verfahren nach einem der vorhergehenden Ansprüche, **dadurch gekennzeichnet, dass** die Wegpunktdaten (44 - 46) ein Wegpunktdatenfeld (51) für die Koordinaten des Wegpunktes (1-10) umfassen.

6. Verfahren nach einem der vorhergehenden Ansprüche, **dadurch gekennzeichnet, dass** die Wegpunktdaten (44 - 46) einen Wegpunktdatenkopf (50) aufweisen, der angibt, ob die jeweiligen Wegpunktdaten optionale Wegpunktdatenfelder (52 - 60) aufweisen.

7. Verfahren nach Anspruch 6, **dadurch gekennzeichnet, dass** der Wegpunktdatenkopf (50) die Form eines Bitfoldes aufweist.

8. Verfahren nach Anspruch 6 oder 7, **dadurch gekennzeichnet, dass** die optionalen Wegpunktdatenfelder (25 - 60) eines oder mehrere der folgenden Datenfelder umfassen:
- Routing-ID (52),
- Nummer des nachfolgenden Wegpunktes (53),
- Straßenname (54),
- grafischer Zielfilhrungshinweis (55),
- akustischer Zielführungshinweis (56),
- Straßenklasse, Zeit Länge (57),
- eretes reserviertes Datenfeld (58),
- zweites reserviertes Datenfeld (59),
- Liste der Falschabzweige (60),
- Anzahl von Wegpunkten.

9. Verfahren nach einem der Ansprüche 6 bis 8, **dadurch gekennzeichnet, dass** für einen Wegpunkt (1 - 10) die optionalen Wegpunktdatenfelder (52 - 60) vorgesehen werden, deren Inhalt sich bezüglich dem vorhergehenden Wegpunkt (1-10) ändert.

10. Verfahren nach einem der Ansprüche 8 bis 10, **dadurch gekennzeichnet, dass** die Liste der Falschabzweige (60) ein Datenfeld (70) für die Anzahl der Abzweigen aufweist.

11. Verfahren nach einem der Ansprüche 8 bis 11 und Anspruch 6, **dadurch gekennzeichnet, dass** die Liste der Falschabzweige (60) für jeden Abzweig Abzweigdaten (71, 72) umfasst, die zumindest ein Abzweigdatenfeld (50) für den wegpunktdatenkopf und ein Abzweigdatenfeld (51) für die Nachfolgernummer aufweist.

12. Verfahren nach Anspruch 12, **dadurch gekennzeichnet, dass** ein Abzweigdatenfeld ein oder mehrere der folgenden optionalen Datenfelder umfasst:
- Straßenname (54),
- grafischer Zielführungshinweis (55),
- akustischer Zielführungshinweis (56),
- Straßenklasse, Zeit Länge (57),
- erstes reserviertes Datenfeld (58),
- zweites reserviertes Datenfeld, (59),
- Liste der Falschabzweige (60).

13. Verfahren nach einem der vorhergehenden Ansprüche, **dadurch gekennzeichnet, dass** für einen Abzweig die optionalen Abzweigdatenfelder vorgesehen werden, deren Inhalt sich bezüglich dem vorhergehenden Abzweig ändert.

14. Verfahren nach einem der vorhergehenden Ansprüche, **dadurch gekennzeichnet, dass** die Routendaten ein festes Datenformat aufweisen.

15. Verfahren nach einem der Ansprüche 1 bis 14, **dadurch gekennzeichnet, dass** die Routendaten ein flexibles Datenformat aufweisen.

16. Endgerät, insbesondere Fahrzeugnavigationssystem, das zur Teilnahme an dem Verfahren nach einem der vorhergehenden Ansprüche ausgelegt ist.

17. Zentrale, die zur Teilnahme an dem Verfahren nach einem der Ansprüche 1 bis 16 ausgelegt ist.

## Claims

1. Method for transmitting at least route data (40) from a control centre to a terminal, particularly a vehicle navigation appliance, wherein the route data (40) relate to at least one route corridor which has a route corridor starting point (1) and a route corridor destination (6), wherein the route data (40) comprise waypoint data (44-46) which relate to waypoints (1-10) which are situated between the route corridor starting point (1) and the route corridor destination (6), wherein two adjacent waypoints are connected by a path, and the route corridor starting point (1) and the route corridor destination (6) likewise form a respective waypoint (1, 6), and wherein the waypoint data (44-46) comprise, in addition to the attributes of the relevant waypoint (1-10), attributes of paths which branch off from the relevant waypoint (1-10), **characterized in that** the waypoint data (44-46) for waypoints situated at the beginning of the route corridor are transmitted first and **in that** it is assumed that the next waypoint is defined by the next transmitted waypoint data (44-46) at least if the waypoint data (44-46) do not contain any details of the next waypoint (1-10).

2. Method according to Claim 1, **characterized in that** before the route data (40) are transmitted, meta data (20) are transmitted which indicate what data format the waypoint data (44-46) have and what information they contain.

3. Method according to Claim 2, **characterized in that** the meta data (20) relate to one or more of the following meta information items:
- voice identifier (21),
- country identifier (22),
- character set used (23),
- reference system (units) (24),
- left-hand or right-hand traffic (25),
- journey time and/or road class available for each section of the route corridor? (26),
- length of each section of the route corridor available? (27),
- coordinate coding used (28),
- coding of the waypoint number (29),
- coding of the routing ID (30),
- remaining journey time and/or remaining distance to the destination available? (31).

4. Method according to one of the preceding claims, **characterized in that** the waypoint data (44-46) are transmitted sequentially.

5. Method according to one of the preceding claims, **characterized in that** the waypoint data (44-46) comprise a waypoint data field (51) for the coordinates of the waypoint (1-10).

6. Method according to one of the preceding claims, **characterized in that** the waypoint data (44-46) have a waypoint data header (50) which indicates whether the respective waypoint data have optional waypoint data fields (52-60).

7. Method according to Claim 6, **characterized in that** the waypoint data header (50) has the form of a bit field.

8. Method according to Claim 6 or 7, **characterized in that** the optional waypoint data fields (52-60) comprise one or more of the following data fields:
- routing ID (52),
- number of the subsequent waypoint (53),
- road name (54),
- graphical routing advice (55),
- audible routing advice (56),
- road class, length of time (57),
- first reserved data field (58),
- second reserved data field (59),
- list of incorrect turn-offs (60),
- number of waypoints.

9. Method according to one of Claims 6 to 8, **characterized in that** a waypoint (1-10) has the optional waypoint data fields (52-60) provided for it, the content of which changes relative to the preceding waypoint (1-10).

10. Method according to one of Claims 8 and 9, **characterized in that** the list of incorrect turn-offs (60) has a data field (70) for the number of turn-offs.

11. Method according to one of Claims 8 to 10 and Claim 6, **characterized in that** the list of incorrect turn-offs (60) comprises, for each turn-off, turn-off data (71, 72) which have at least one turn-off data field (50) for the waypoint data header and a turn-off data field (51) for the sequel number.

12. Method according to Claim 11, **characterized in that** a turn-off data field comprises one or more of the following optional data fields:
- road name (54),
- graphical routing advice (55),
- audible routing advice (56),
- road class, length of time (57),
- first reserved data field (58),
- second reserved data field (59),
- list of incorrect turn-offs (60),

13. Method according to one of the preceding claims, **characterized in that** a turn-off has the optional turn-off data fields provided for it, the content of which changes relative to the preceding turn-off.

14. Method according to one of the preceding claims, **characterized in that** the route data have a fixed data format.

15. Method according to one of Claims 1 to 14, **characterized in that** the route data have a flexible data format.

16. Terminal, particularly a vehicle navigation system, which is designed for participation in the method according to one of the preceding claims.

17. Control centre which is designed for participation in the method according to one of Claims 1 to 16.

## Revendications

1. Procédé pour transmettre au moins des données d'itinéraire (40) d'un central vers un terminal, notamment un appareil de navigation pour véhicule, les données d'itinéraire (40) concernant au moins un corridor d'itinéraire qui présente un point de départ de corridor d'itinéraire (1) et un point destinataire de corridor d'itinéraire (6), les données d'itinéraire (40) comprenant des données de point de trajet (44 - 46) qui concernent des points de trajet (1 - 10) qui se trouvent entre le point de départ de corridor d'itinéraire (1) et le point destinataire de corridor d'itinéraire (6), deux points de trajet voisins étant reliés par un trajet et le point de départ de corridor d'itinéraire (1) ainsi que le point destinataire de corridor d'itinéraire (6) formant également un point de trajet (1, 6) correspondant, et les données de point de trajet (44 - 46) comprenant, en plus des attributs du point de trajet (1 - 10) correspondant, des attributs de trajets qui bifurquent du point de trajet (1 - 10) correspondant, **caractérisé en ce que** les données de point de trajet (44 - 46) pour les points de trajet qui se trouvent au début du corridor d'itinéraire sont transmises en premier et qu'il est ensuite au moins supposé que le point de trajet suivant est défini par les données de point de trajet (44 - 46) transmises suivantes lorsque les données de point de trajet (44 - 46) ne contiennent aucune indication concernant le point de trajet (1 - 10) suivant.

2. Procédé selon la revendication 1, **caractérisé en ce qu'**avant la transmission des données d'itinéraire (40) sont transmises des métadonnées (20) qui indiquent le format de données que présentent les données de point de trajet (44 - 46) et quelles informations elles contiennent.

3. Procédé selon la revendication 2, **caractérisé en ce que** les métadonnées (20) concernent une ou plusieurs des méta-informations suivantes :
- reconnaissance de la langue (21),
- reconnaissance des pays (22),
- jeu de caractères utilisé (23),
- système de référence (unités) (24),
- conduite à gauche ou à droite (25),
- existence d'un temps de déplacement et/ou d'une catégorie de route pour chaque tronçon partiel du corridor d'itinéraire ? (26),
- existence d'une longueur de chaque tronçon partiel du corridor d'itinéraire ? (27),
- codage des coordonnées utilisé (28),
- codage du numéro de point de trajet (29),
- codage de l'ID d'itinéraire (30),
- existence d'un temps de déplacement restant et/ou d'un trajet restant jusqu'à la destination ? (31).

4. Procédé selon l'une des revendications précédentes, **caractérisé en ce que** les données de point de trajet (44 - 46) sont transmises séquentiellement.

5. Procédé selon l'une des revendications précédentes, **caractérisé en ce que** les données de point de trajet (44 - 46) comprennent un champ de données de point de trajet (51) pour les coordonnées du point de trajet (1 - 10).

6. Procédé selon l'une des revendications précédentes, **caractérisé en ce que** les données de point de trajet (44 - 46) présentent une en-tête de données de point de trajet (50) qui indique si les données de point de trajet correspondantes présentent des champs de données de point de trajet (52 - 60) optionnels.

7. Procédé selon la revendication 6, **caractérisé en ce que** l'en-tête de données de point de trajet (50) présente la forme d'un champ binaire.

8. Procédé selon la revendication 6 ou 7, **caractérisé en ce que** les champs de données de point de trajet (52 - 60) optionnels comprennent un ou plusieurs des champs de données suivants :
- ID d'itinéraire (52),
- numéro du point de trajet suivant (53),
- nom de la rue (54),
- instruction graphique de guidage jusqu'à la destination (55),
- instruction sonore de guidage jusqu'à la destination (56),
- catégorie de route, temps, durée (57),
- premier champ de données réservé (58),
- deuxième champ de données réservé (59),
- liste des bifurcations erronées (60),
- nombre de points de trajet.

9. Procédé selon l'une des revendications 6 à 8, **caractérisé en ce que** les champs de données de point de trajet (52 - 60) optionnels qui sont prévus pour un point de trajet (1 - 10) sont ceux dont le contenu change par rapport au point de trajet (1 - 10) précédent.

10. Procédé selon l'une des revendications 8 et 9, **caractérisé en ce que** la liste des bifurcations erronées (60) présente un champ de données (70) pour le nombre de bifurcations.

11. Procédé selon l'une des revendications 8 à 10 et selon la revendication 6, **caractérisé en ce que** la liste des bifurcations erronées (60) comprend pour chaque bifurcation des données de bifurcation (71, 72) qui présentent au moins un champ de données de bifurcation (50) pour l'en-tête de données de point de trajet et un champ de données de bifurcation (51) pour le numéro suivant.

12. Procédé selon la revendication 11, **caractérisé en ce qu'**un champ de données de bifurcation comprend un ou plusieurs des champs de données optionnels suivants :
- nom de la rue (54),
- instruction graphique de guidage jusqu'à la destination (55),
- instruction sonore de guidage jusqu'à la destination (56),
- catégorie de route, temps, durée (57),
- premier champ de données réservé (58),
- deuxième champ de données réservé (59),
- liste des bifurcations erronées (60).

13. Procédé selon l'une des revendications précédentes, **caractérisé en ce que** les champs de données de bifurcation optionnels qui sont prévus pour une bifurcation sont ceux dont le contenu change par rapport à la bifurcation précédente.

14. Procédé selon l'une des revendications précédentes, **caractérisé en ce que** les données d'itinéraire présentent un format de données fixe.

15. Procédé selon l'une des revendications 1 à 14, **caractérisé en ce que** les données d'itinéraire présentent un format de données flexible.

16. Terminal, notamment système de navigation pour véhicule, qui est conçu pour participer au procédé selon l'une des revendications précédentes.

17. Central qui est conçu pour participer au procédé selon l'une des revendications 1 à 16.
